(19) Europäisches Patentamt
European Patent Office
Office européen des brevets

(11) **EP 4 034 863 B1**

(12) **FASCICULE DE BREVET EUROPEEN**

(45) Date de publication et mention de la délivrance du brevet:
**25.12.2024 Bulletin 2024/52**

(21) Numéro de dépôt: **20753682.2**

(22) Date de dépôt: **21.07.2020**

(51) Classification Internationale des Brevets (IPC):
**G01J 3/02** *(2006.01)*        **G01J 3/50** *(2006.01)*

(52) Classification Coopérative des Brevets (CPC):
**G01J 3/501; G01J 3/0208**

(86) Numéro de dépôt international:
**PCT/EP2020/070596**

(87) Numéro de publication internationale:
**WO 2021/058172 (01.04.2021 Gazette 2021/13)**

(54) **SYSTÈME ET PROCÉDÉ DE CONTRÔLE DE LA COULEUR D'UN ARTICLE EN DÉPLACEMENT**

SYSTEM UND VERFAHREN ZUM STEUERN DER FARBE EINES SICH BEWEGENDEN GEGENSTANDES

SYSTEM AND METHOD FOR CONTROLLING THE COLOUR OF A MOVING ARTICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.09.2019 FR 1910487**

(43) Date de publication de la demande:
**03.08.2022 Bulletin 2022/31**

(73) Titulaire: **VEORIA**
**72450 Montfort-le-Gesnois (FR)**

(72) Inventeurs:
• **COPIN, Philippe**
**30220 Aigues-Mortes (FR)**
• **MARTIN, Dominique**
**34980 St Gély du Fesc (FR)**

(74) Mandataire: **Osha BWB**
**2, rue de la Paix**
**75002 Paris (FR)**

(56) Documents cités:
EP-A1- 2 881 730        WO-A1-2013/120956
WO-A1-94/25838        US-A1- 2007 139 735
US-A1- 2007 252 990        US-A1- 2010 044 441

## Description

La présente invention concerne le contrôle de la couleur d'un article en déplacement et s'applique notamment au contrôle de la couleur dans le domaine de l'impression industrielle.

### Etat de la technique

Portée par les nouvelles technologies numériques, l'impression industrielle se développe dans de nombreux secteurs tels que le packaging, le textile, l'automobile, la cosmétique, la pharmacie, la chimie, l' agro-alimentaire, l'ameublement, etc.

La qualité d'impression et le respect de la couleur sont primordiaux pour éviter l'insatisfaction des clients ; aussi, le contrôle de la conformité de l'impression couleur constitue un enjeu concurrentiel pour les nouveaux utilisateurs des technologies d'impression numérique, qui sont demandeurs d'automatisation dans les processus industriels de contrôle de la qualité de l'impression. Le seuil rejet / acceptation résultant du contrôle automatique doit être positionné entre la sous-qualité qui laisse partir des objets non conformes et entraîne des retours coûteux, et la sur-qualité qui rejette des objets acceptables par le client avec, là encore, des surcoûts.

Un contrôle humain de la couleur permet facilement d'être proche des critères de validation du client ; Cependant, le contrôle de la couleur par un opérateur nécessite une expérience longue pour former un spécialiste du contrôle. Par ailleurs, la subjectivité du contrôle par un opérateur et la fatigue visuelle rendent les contrôles humains peu fiables ou répétables.

Des méthodes de contrôle automatique de la couleur se sont ainsi développées.

Il est connu par exemple un contrôle de la couleur basé sur l'utilisation de caméras « RGB » (RGB, acronyme anglo-saxon de « Red », « Green », « Blue »). Une lumière incidente blanche éclaire l'article imprimé à contrôler et la lumière réfléchie est analysée par la caméra RGB dans au moins 3 bandes spectrales rouge, vert, bleu. Un tel contrôle automatique de la couleur est décrit par exemple dans le brevet EP 2172171, dans lequel est décrit un système de contrôle de la couleur d'une image imprimée sur une bande d'impression en cours de déplacement.

A partir des composantes RGB, il est possible de déterminer un « profil couleur », par exemple déterminé dans un espace L*a*b* CIE 1976, qui pourra être comparé à un profil couleur de référence. Cependant, la lumière qui éclaire des surfaces colorées participe à la formation du spectre lumineux perçu par l'oeil. Deux surfaces peuvent sembler identiques sous un éclairage donné et apparaître de couleurs différentes avec un autre éclairage. C'est le cas des couleurs métamères dont le spectre physique est différent mais qui ont des valeurs identiques en RGB sous un éclairage donné. Elles deviennent différentes si on change le spectre de l'éclairage. Ainsi, le contrôle de couleur au moyen d'une caméra RGB ne permet qu'une mesure relative de la couleur, utile pour mesurer des dérives mais nécessitant une calibration préalable qu'il faudra refaire si les conditions extérieures changent.

Il est également connu l'utilisation d'un spectrophotomètre pour le contrôle automatique de la couleur. Un spectrophotomètre permet une analyse complète du spectre de la lumière réfléchie par l'article éclairé en lumière blanche. Plus précisément, il permet, par rapport à une caméra RGB, de convertir des bandes d'énergie du spectre en une mesure absolue dans l'espace L*a*b* indépendante du profil de la source et d'accéder ainsi à un contrôle en « vraie couleur ».

Cependant, le contrôle par spectrophotomètre est réalisé par échantillonnage sur des aplats imprimés de surface minimale 5 mm x 5 mm. Le contrôle ne peut donc être fait que dans des zones uniformes (même couleur, sans gradient), ce qui limite le contrôle de qualité pour les caractères imprimés et plus généralement toutes les surfaces dont la taille est inférieure à 5 mm x 5 mm.

D'autres méthodes sont divulguées (voir par exemple WO 94/25838 ou US 2007/0139735) comprenant l'éclairage d'un échantillon à analyser au moyen de faisceaux de longueurs d'onde différentes. Cependant, dans les méthodes décrites, seules une ou plusieurs zones ponctuelles d'un échantillon peuvent être analysées. Un objectif de la présente description est de proposer un système de contrôle de la couleur d'un article en déplacement qui permette notamment une mesure absolue de la couleur, en temps réel, et sur toute la surface d'un article en déplacement.

### Résumé de l'invention

Dans la présente description et dans les revendications qui suivent, le terme « comprendre » est synonyme de (signifie la même chose que) « inclure », « contenir », et est inclusif ou ouvert et n'exclut pas d'autres éléments non décrits ou représentés. En outre, dans la présente description, le terme « environ » est synonyme de (signifie la même chose que) une marge inférieure et/ou supérieure de 10%, par exemple 5%, de la valeur respective.

Selon un premier aspect, la présente description concerne un système de contrôle de la couleur en temps réel d'un article sur un support en déplacement selon une direction de déplacement donnée, comprenant :

- un dispositif d'éclairage configuré éclairer ledit article en déplacement selon des cycles d'éclairage successifs, chaque cycle d'éclairage comprenant la formation successive, à une fréquence donnée, d'un nombre donné N de lignes d'éclairage présentant des bandes spectrales distinctes, N ≥ 4, lesdites lignes d'éclairage étant sensiblement perpendiculaires à la direction de déplacement, l'ensemble des N lignes d'éclairage formées pendant un cycle d'éclairage définissant sur l'article en déplacement une bande d'éclairage de dimension donnée dans la direction de déplacement;

- un dispositif de détection configuré pour détecter, pendant chaque cycle d'éclairage, la lumière rétrodiffusée par l'article éclairé successivement par chacune desdites lignes d'éclairage, de telle sorte à former, pendant chaque cycle d'éclairage, en chaque point d'un nombre de points donnés d'une bande d'observation perpendiculaire à la direction de déplacement, un nombre N de signaux correspondant respectivement à la lumière rétrodiffusée par ledit point dans chacune des bandes spectrales ;

- une unité de traitement configurée pour déterminer, en chacun des points de la bande d'observation et à partir desdits N signaux, au moins une valeur représentative de la couleur dudit point.

Selon un ou plusieurs exemples de réalisation, le système est configuré pour le contrôle d'articles agencés sur un support qui défile et le déplacement est un mouvement de translation ; la direction de déplacement est ainsi parallèle à la direction de translation.

Selon un ou plusieurs exemples de réalisation, le système est configuré pour le contrôle d'articles agencés sur un support en rotation, par exemple un cylindre en rotation ; la direction de déplacement est alors perpendiculaire à une génératrice du cylindre.

Dans la présente description, on entend par « lumière rétrodiffusée » toute la lumière réémise par l'article lorsqu'il est éclairé par une ligne d'éclairage, que ce soit par un mécanisme de réflexion, de diffusion ou une combinaison des deux.

Le système de contrôle de la couleur ainsi décrit permet notamment, par rapport aux systèmes connus de l'état de l'art, une mesure absolue de la couleur, en temps réel, sur toute la surface de l'article et permet une différenciation des couleurs inférieure ou égale à la sensibilité de l'oeil.

Selon un ou plusieurs exemples de réalisation, ladite au moins une valeur représentative de la couleur comprend des coordonnées définis sur la sphère Lab définissant un « angle de teinte » et une luminance, par exemple la sphère dite « 1976 CIE L*a*b* » adoptée par le Comité International de l'Eclairage (CIE) en 1976 et définie selon la norme ISO 11664-4.

Selon un ou plusieurs exemples de réalisation, ladite au moins une valeur représentative de la couleur comprend un écart de couleur (ou distance entre couleurs) déterminé par rapport à un objet de référence. L'objet de référence est par exemple un article du même type que celui dont on cherche à contrôler la couleur (étalon »), ou un fichier de référence comprenant les données qui ont permis l'impression.

L'écart de couleur est par exemple déterminé dans l'espace CIE L*a*b* par exemple par l'une ou l'autre des formules : $\Delta E76$ dite « Delta 1976 » ou $\Delta E00$ dite « Delta 2000 », ces deux formules étant définies dans la norme ISO 12647-2 version 2013. En pratique, la formule $\Delta E76$ calcule une distance euclidienne entre deux couleurs définies dans l'espace CIE L*a*b* et la formule $\Delta E00$ prend en compte les conditions d'observation (comme par exemple les différences de sensibilité des cônes de l'oeil humain selon les couleurs et la luminosité) pour se rapprocher encore d'une perception humaine.

Selon un ou plusieurs exemples de réalisation, le nombre N de lignes d'éclairage de bandes spectrales distinctes est compris entre 4 et 36, avantageusement entre 8 et 12. La déposante a montré que dans cette plage, on obtient un bon compromis entre un nombre suffisant de bandes spectrales distinctes pour avoir une bonne précision dans la caractérisation de la couleur et un temps de mesure réduit pour le contrôle.

Selon un ou plusieurs exemples de réalisation, le dispositif d'éclairage comprend une pluralité de sources lumineuses configurées pour l'émission successive d'un ou plusieurs faisceaux dans chacune desdites bandes spectrales, et un ou plusieurs éléments optiques configurés pour former, à partir du ou desdits faisceaux émis dans chacune desdites bandes spectrales, une ligne d'éclairage dans ladite bande spectrale. Le ou lesdits éléments optiques comprennent par exemple une ou plusieurs lentilles, dont par exemple une ou plusieurs lentilles cylindriques, et/ou un ou plusieurs éléments réfléchissants, notamment pour la concentration de la puissance lumineuse d'éclairage.

Selon un ou plusieurs exemples de réalisation, le ou lesdits éléments optiques comprennent en outre un diffuseur pour homogénéiser chacune des lignes d'éclairage.

Le ou lesdits éléments optiques visent à former à partir de la lumière émise par la ou lesdites sources lumineuses dans chacune des bandes spectrales, une ligne d'éclairage perpendiculaire à la direction de déplacement, et de largeur donnée dans la direction de déplacement.

Selon un ou plusieurs exemples de réalisation, le ou lesdits éléments optiques sont configurés pour former la pluralité des N lignes d'éclairage correspondant à la pluralité de bandes spectrales sensiblement à la même position sur le support de l'article.

Selon un ou plusieurs exemples de réalisation, la fréquence de formation des lignes et/ou le dispositif optique pour la formation des lignes d'éclairage sont configurés de telle sorte que lesdites N lignes d'éclairage formées sur ledit article en déplacement pendant un cycle d'éclairage sont juxtaposées.

Selon un ou plusieurs exemples de réalisation, la fréquence de formation des lignes et/ou le dispositif optique pour la formation des lignes d'éclairage sont configurés de telle sorte que lesdites N lignes d'éclairage formées sur ledit article en déplacement pendant un cycle d'éclairage sont au moins partiellement superposées.

Selon un ou plusieurs exemples de réalisation la ou les sources d'éclairage comprennent un ensemble de sources ponctuelles multiplexées, par exemple des sources de type LED (« Light Emitting Diode ») ou des diodes laser.

Selon un ou plusieurs exemples de réalisation, le dispositif de détection comprend au moins un capteur fixe et un ou plusieurs éléments optiques configurés pour former, pendant chaque cycle, une image de chaque ligne d'éclairage rétrodiffusée par l'article sur ledit capteur.

Selon un ou plusieurs exemples de réalisation, ledit au moins un capteur est monochrome.

Selon un ou plusieurs exemples de réalisation, ledit au moins un capteur est linéaire, c'est-à-dire formé d'une ligne d'éléments photosensibles (« pixels »).

Par exemple, ledit au moins un capteur comprend une caméra CCD ou une caméra CMOS, comprenant par exemple entre 4096 (4k) et 16384 (16 k) éléments photosensibles avec un pas de 3,5 $\mu$m.

Selon un ou plusieurs exemples de réalisation, la dimension de la bande d'observation dans une direction parallèle à la direction de déplacement est comprise entre 0,1 mm et 1 mm, avantageusement entre 0,1 mm et 0,7 mm, par exemple entre environ 0,1 mm et environ 0,5 mm.

Selon un ou plusieurs exemples de réalisation, les dimensions d'un point de la bande d'observation sont sensiblement identiques dans la direction de déplacement et dans la direction transverse (perpendiculaire à la direction de déplacement). En pratique, la dimension d'un point dans la direction de déplacement (ou « résolution longitudinale ») est égale à la dimension de la bande d'observation dans la direction de déplacement et la dimension d'un point dans la direction transverse (ou « résolution transverse ») est donnée par les dimensions des éléments photosensibles du ou des capteur(s). Ainsi, pour obtenir une résolution identique dans les deux directions, on pourra moyenner le signal issu d'une pluralité d'éléments photosensibles adjacents dont la dimension selon une direction est habituellement de quelques dizaines de microns.

Selon un ou plusieurs exemples de réalisation, la bande d'observation est définie par la bande d'éclairage.

Selon un deuxième aspect, la présente description concerne un procédé de contrôle de la couleur d'un article sur un support en déplacement selon une direction donnée, comprenant :

- l'éclairage dudit article en déplacement, au moyen d'un dispositif d'éclairage et selon des cycles d'éclairage successifs, chaque cycle d'éclairage comprenant la formation successive, à une fréquence donnée, d'un nombre donné N de lignes d'éclairage présentant des bandes spectrales distinctes, N $\geq$ 4, lesdites lignes d'éclairage étant sensiblement perpendiculaires à la direction de déplacement, l'ensemble des N lignes d'éclairage formées pendant un cycle d'éclairage définissant sur l'article en déplacement une bande d'éclairage de dimension donnée dans la direction de déplacement ;

- la détection, au moyen d'un dispositif de détection, pendant chaque cycle d'éclairage, de la lumière rétrodiffusée par l'article éclairé successivement par chacune desdites lignes d'éclairage, de telle sorte à former, pendant chaque cycle d'éclairage, en chaque point d'un nombre de points donnés d'une bande d'observation perpendiculaire à la direction de déplacement, un nombre N de signaux correspondant respectivement à la lumière rétrodiffusée par ledit point dans chacune des bandes spectrales ;

- la détermination, en chacun des points de la bande d'observation et à partir desdits N signaux, d'au moins une valeur représentative de la couleur dudit point.

Selon un ou plusieurs exemples de réalisation, ladite au moins une valeur représentative de la couleur comprend un angle de teinte et une luminance définis sur la sphère Lab, par exemple la sphère dite « 1976 CIE L*a*b*».

Selon un ou plusieurs exemples de réalisation, ladite au moins une valeur représentative de la couleur comprend un écart de couleur (ou distance entre couleurs) déterminé par rapport à un objet de référence.

Selon un ou plusieurs exemples de réalisation, la détermination de ladite au moins une valeur représentative de la couleur comprend une ou plusieurs étapes de moyennage, dont par exemple le moyennage pondéré de signaux acquis par la détection de plusieurs lignes d'éclairage de même bande spectrale et de cycles d'éclairage consécutifs. Un tel moyennage pondéré permet d'améliorer la précision de la caractérisation de la couleur, au détriment de la résolution longitudinale.

Selon un ou plusieurs exemples de réalisation, le procédé de contrôle comprend une étape préalable de calibration du dispositif de détection. Par exemple, la calibration est faite au moyen d'une mire étalonnée.

**Brève description des figures**

D'autres avantages et caractéristiques de l'invention apparaîtront à la lecture de la description, illustrée par les figures suivantes :

[Fig. 1] représente un schéma fonctionnel d'un exemple de système de contrôle de la couleur selon la présente description.

[Fig. 2A] illustre un exemple d'objet sur un support en défilement, pour la mise en oeuvre d'un procédé de contrôle de la couleur selon la présente description.

[Fig. 2B] illustre un exemple d'objet sur un support en rotation, pour la mise en oeuvre d'un procédé de contrôle de la couleur selon la présente description.

[Fig. 3] représente des schémas fonctionnels d'exemples de formations de lignes d'éclairage, pendant un cycle d'éclairage, dans un procédé de contrôle de la couleur selon la présente description.

[Fig. 4] représente un schéma synoptique illustrant la formation des lignes d'éclairage et la détection des signaux lumineux correspondant, pendant un nombre donné de cycle d'éclairage, selon un exemple de mise en oeuvre d'un procédé de contrôle de la couleur selon la présente description.

[Fig. 5A] représente un schéma fonctionnel d'un exemple de dispositif d'éclairage dans un système de contrôle de la couleur selon la présente description.

[Fig. 5B] représente un schéma fonctionnel d'un exemple de dispositif de détection dans un système de contrôle de la couleur selon la présente description.

[Fig. 6] représente un schéma fonctionnel d'exemples de système de contrôle de la couleur selon la présente description, avec respectivement deux exemples d'éclairage et de détection.

[Fig. 7] représente des courbes de spectres (intensité normalisée ne fonction de la longueur d'ondes) de lignes d'éclairage, selon un exemple de mise en oeuvre d'un procédé de contrôle de la couleur selon la présente description.

[Fig. 8] représente un schéma fonctionnel d'un exemple de source lumineuse dans un système de contrôle de la couleur selon la présente description.

[Fig. 9] représente un schéma fonctionnel d'un exemple de dispositif d'éclairage dans un système de contrôle de la couleur selon la présente description.

[Fig. 10] représente un schéma illustrant la sphère CIE Lab (ou « 1976 CIE L*a*b* ») adoptée par le Comité International de l'Eclairage (CIE) en 1976 et définie selon la norme ISO 11664-4.

## Description détaillée de l'invention

Dans la description détaillée suivante des formes de réalisation de la présente invention, de nombreux détails spécifiques sont exposés afin de fournir une compréhension plus approfondie de la présente description. Cependant, il apparaîtra à l'homme du métier que la présente description peut être mise en oeuvre sans ces détails spécifiques. Dans d'autres cas, des caractéristiques bien connues n'ont pas été décrites en détail pour éviter de compliquer inutilement la description.

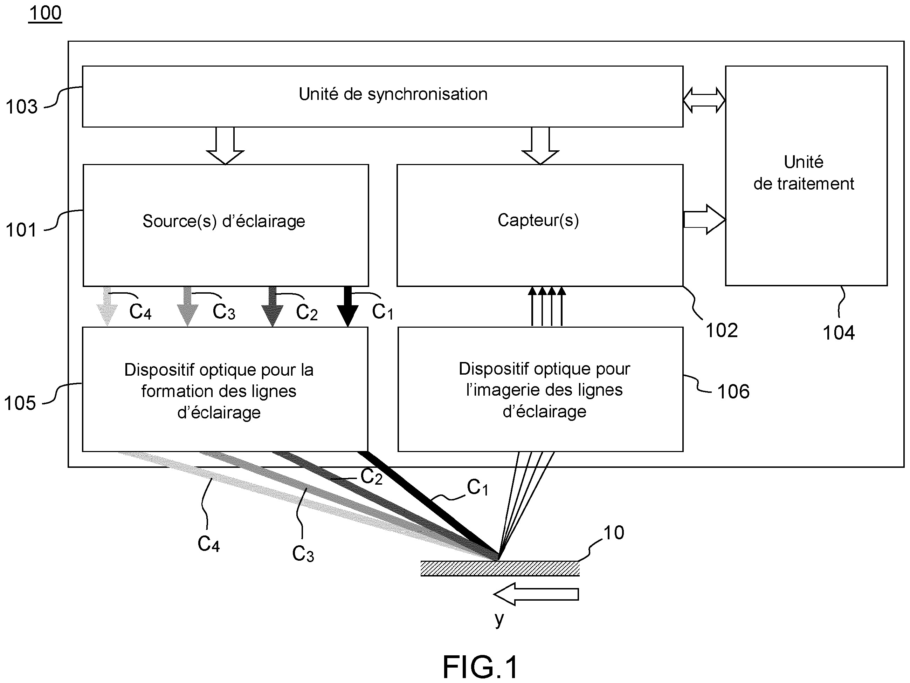

La Fig. 1 représente un schéma fonctionnel d'un exemple de système de contrôle de la couleur 100 d'un article 10 agencé sur un support en déplacement, selon la présente description.

Le système de contrôle de la couleur 100 comprend un dispositif d'éclairage avec une ou plusieurs sources d'éclairage 101 et un dispositif optique 105 comprenant un ou plusieurs éléments optiques pour la formation de lignes d'éclairage à partir de faisceaux d'éclairage issus de la ou desdites source(s) d'éclairage. Le système de contrôle de la couleur 100 comprend par ailleurs un dispositif de détection avec au moins un capteur 102 et un deuxième dispositif optique 106 comprenant un ou plusieurs éléments optiques pour la formation d'images des lignes d'éclairage sur ledit au moins un capteur. Le système de contrôle de la couleur 100 comprend en outre dans cet exemple une unité 103 de synchronisation de l'éclairage et de la détection avec le déplacement et une unité de traitement 104.

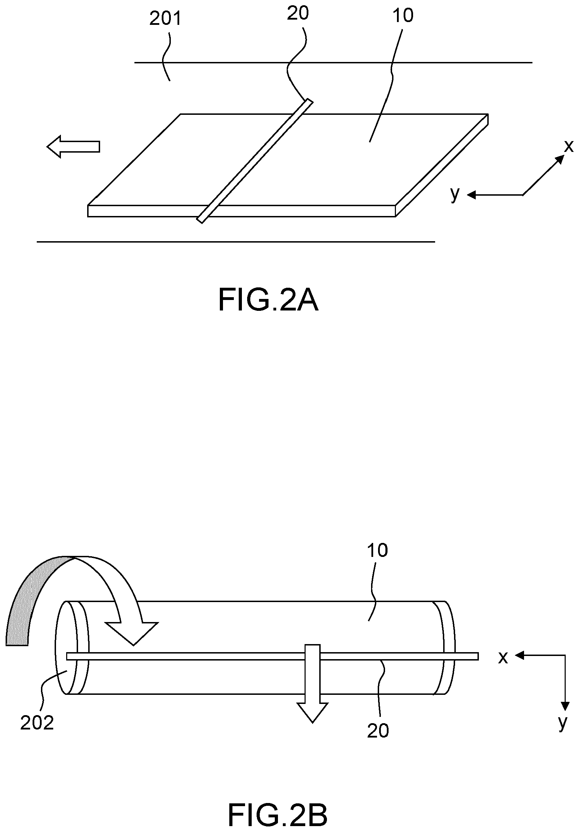

Comme illustré sur la Fig. 2A, l'article 10 peut être agencé sur un support 201 en défilement. Le déplacement est alors une translation selon une direction Y parallèle à la direction de translation.

Cette configuration s'applique par exemple à un article de type bande de papier, tissu, film plastique en sortie d'une machine d'impression, mais aussi articles en volume de type boîtes rectangulaires, etc.

Comme illustré sur la Fig. 2B, l'objet 10 peut également être agencé sur un support 202 en rotation, par exemple un support cylindrique. La direction de déplacement Y est alors perpendiculaire à une génératrice du cylindre.

Cette configuration s'applique par exemple à un article de type tube de distribution ou boîte cylindrique imprimée.

Le dispositif d'éclairage est configuré pour former successivement, sur l'article en déplacement, une pluralité de cycles d'éclairage. Chaque cycle d'éclairage comprend la formation successive, à une fréquence donnée, d'un nombre donné N de lignes d'éclairage présentant des bandes spectrales distinctes, $N \geq 4$. Chaque ligne d'éclairage résulte de la mise en forme par le dispositif optique 105 d'un faisceau d'éclairage émise par la ou lesdites sources 101 de bande spectrale ou « couleur » donnée, référencés $C_1, C_2, C_3, C_4$ dans l'exemple de la Fig. 1.

Le dispositif de détection 102, 106 est quant à lui configuré pour détecter, pendant chaque cycle d'éclairage, la lumière rétrodiffusée par l'article éclairé successivement par chacune desdites lignes d'éclairage.

Les lignes d'éclairage formées par la ou lesdites sources d'éclairage 101 et le dispositif optique 105 sont sensiblement perpendiculaires à la direction de déplacement. Elles définissent pendant un cycle d'éclairage une bande d'éclairage dont la largeur (ou direction dans le sens de la marche, c'est-à-dire dans le sens du déplacement) dépend de la largeur de chaque ligne d'éclairage, de la fréquence de formation des lignes d'éclairage pendant un cycle d'éclairage et de la vitesse de déplacement du support (vitesse de translation dans l'exemple de la Fig. 2A ou vitesse tangentielle dans l'exemple de la Fig. 2B).

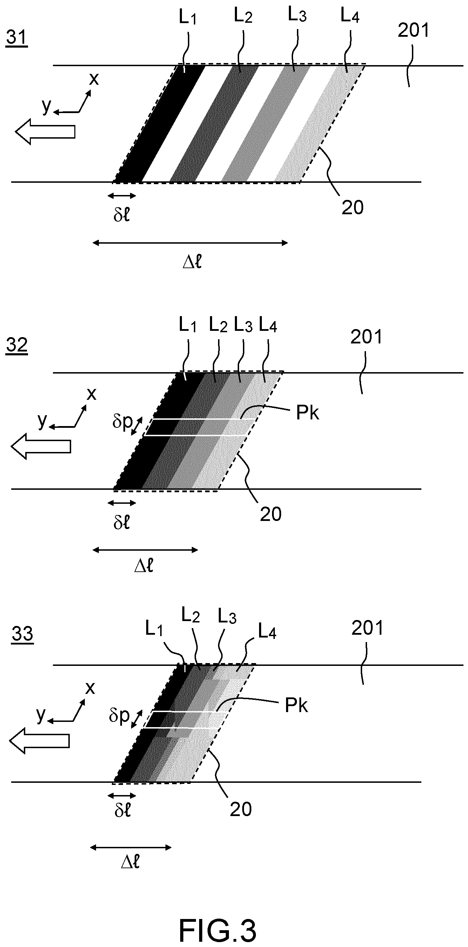

La Fig. 3 illustre ainsi 3 exemples (31 - 33) de formation de lignes d'éclairage $L_1$ - $L_4$, correspondant respectivement aux faisceaux $C_1$ - $C_4$. L'exemple de la Fig. 3 illustre le cas d'un article sur un support 201 en défilement mais s'applique également au cas d'un article sur un support en rotation.

Dans l'exemple de la Fig. 3, seules 4 lignes d'éclairage sont représentées par souci de simplification mais en pratique, entre 8 et 12 lignes d'éclairage de spectres distincts sont préférées pour obtenir une meilleure détermination de la couleur. Chaque ligne d'éclairage présente une largeur $\delta l$. la bande d'éclairage 20 est formée par l'ensemble des lignes d'éclairage et présente une largeur $\Delta l$.

Dans l'exemple référencé 31, la fréquence de formation des lignes est faible par rapport à la vitesse de déplacement. Il en résulte une bande d'éclairage avec des zones de l'article non éclairées.

Dans l'exemple référencé 32, la fréquence de formation des lignes est adaptée à la vitesse de déplacement de l'article, de telle sorte que deux lignes se trouvent juxtaposées.

Dans l'exemple référencé 33, la fréquence de formation des lignes et/ou le dispositif optique pour la formation des lignes d'éclairage sont configurés de telle sorte que deux lignes se trouvent au moins partiellement superposées. Cette configuration n'est pas gênante puisqu'en pratique, les lignes d'éclairage sont formées les unes après les autres et acquises de façon synchronisée. Ainsi, la bande d'éclairage peut présenter une largeur qui sera au minimum égale à la largeur d'une ligne d'éclairage.

En pratique, le dispositif de détection comprenant le ou les capteur(s) 102 et le dispositif optique 106 permettant d'imager les lignes d'éclairage sur le ou les capteur(s), pourra être configuré pour permettre l'acquisition d'une ligne dont les dimensions sont au moins aussi grandes que celles d'une ligne d'éclairage de telle sorte à ne pas réduire les dimensions de la bande effectivement observée. Ainsi, on pourra définir une bande d'observation correspondant à un cycle d'éclairage, confondue avec la bande d'éclairage. Cependant, si le champ optique défini par le dispositif de détection (ou « ligne d'acquisition ») présente des dimensions plus petites que la ligne d'éclairage, une bande d'observation effective pourra être définie par l'ensemble des lignes d'acquisition pendant un cycle d'éclairage, ou, plus généralement, par la surface commune aux ensembles formés d'une part par les lignes d'éclairage et d'autre part par les lignes d'acquisition. Dans la suite de la description cependant, on fera l'hypothèse que la bande d'observation effective est limitée par la bande d'éclairage.

Ainsi, pendant chaque cycle d'éclairage, pour chaque point $P_k$ de la bande d'observation, le dispositif de détection permet l'acquisition de N signaux correspondant respectivement à la lumière rétrodiffusée par l'article dans chacune des bandes spectrales, et à partir desquels il sera possible de déterminer au moins une valeur représentative de la couleur dudit point.

Comme illustré par exemple sur les schémas 32 et 33 de la Fig. 3, un point $P_k$ présente des dimensions déterminées dans le sens du déplacement par la largeur $\Delta l$ de la bande d'observation et dans le sens transverse (c'est-à-dire dans la direction X perpendiculaire à la direction Y de déplacement), par une dimension $\delta p$ définie par les caractéristiques opto-géométriques du ou des capteurs 102 et du dispositif optique 105. Ainsi par exemple, pour un capteur 102 formé d'un agencement linéaire de éléments photosensibles (ou pixels) de dimensions données, la dimension $\delta p$ d'un point $P_k$ sera égale à la dimension d'un ou plusieurs pixel(s) du capteur, divisée par le grandissement du dispositif optique 106.

On peut alors définir une résolution du système dans le sens de la marche (ou résolution longitudinale), définie par la largeur $\Delta l$ de la bande d'observation et une résolution du système dans le sens transverse (ou résolution transverse), définie par la dimension $\delta p$ d'un point $P_k$.

Du fait de l'agencement original des éléments du système selon la présente description, les déposants ont montré qu'il était possible d'atteindre une résolution longitudinale inférieure à 1 mm, typiquement entre 0,1 mm et 1 mm, 0,1 mm correspondant à la résolution d'un observateur humain observant à une distance de 30 cm. Avantageusement, on pourra obtenir une résolution longitudinale entre 0,1 mm et 0,5 mm, typiquement autour de 0,5 mm. La résolution transverse est fixée par les dimensions des pixels, mais l'on pourra chercher en pratique à avoir les résolutions longitudinale et transverse identiques.

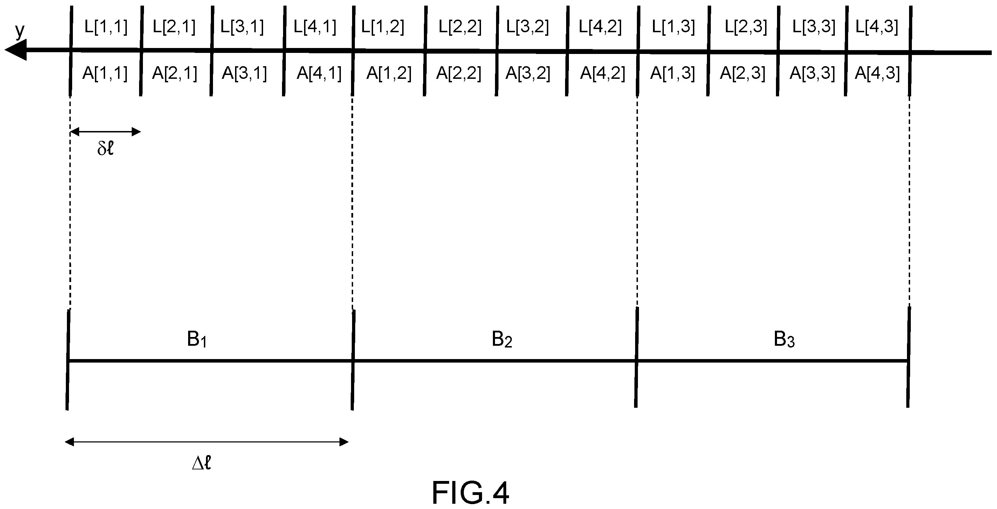

La Fig. 4 illustre selon un exemple la formation des lignes d'éclairage et la détection des signaux lumineux correspondant, pendant un nombre donné de cycle d'éclairage (dans cet exemple 3), selon un exemple de mise en oeuvre d'un procédé de contrôle de la couleur selon la présente description.

Dans cet exemple, on forme au moyen du dispositif d'éclairage et pendant un premier cycle d'éclairage 4 lignes d'éclairage référencées respectivement L [1, 1], L[2,1], L[3,1], L[4,1]. Les lignes d'éclairage ont toutes une même largeur $\delta l$. Comme dans l'exemple montré sur le schéma 32, Fig. 3, l'éclairage est synchronisé avec le déplacement du support au moyen de l'unité de synchronisation 103 pour que les lignes d'éclairage soient juxtaposées et forment une bande d'observation $B_1$. L'éclairage est par ailleurs synchronisé avec la détection pour que le ou les capteur(s) 102 détectent successivement chacune des lignes, ce qui résultent en N signaux d'acquisition référencés A[1,1], A[2,1], A[3,1], A[4,1] sur la Fig. 4.

Par exemple, si l'on cherche une résolution longitudinale $\Delta l$ donnée pour le système de contrôle de la couleur, qui correspond à la largeur de la bande d'observation, et si l'on travaille avec N bandes spectrales différentes, dans cet exemple 4, on pourra choisir un déplacement $\delta s$ incrémental du support égal à $\Delta l$ /N et synchroniser le déplacement avec l'éclairage de telle sorte à ce qu'à chaque déplacement du support, on éclaire avec la ligne suivante.

L'opération est réitérée avec un nombre de cycle suffisant pour couvrir l'article dont on cherche à contrôler la couleur.

Ainsi dans l'exemple de la Fig. 4, on note de façon générale L[i, j] la ligne d'éclairage correspondant à la couleur *i* du cycle *j*, A[i, j] l'acquisition de la lumière rétrodiffusée par la ligne d'éclairage correspondant à la couleur *i* du cycle *j* et Bj la bande d'observation associée à un cycle d'éclairage *j*.

Le dispositif de détection envoie à l'unité de traitement 104, pour chaque point $P_k$ (voir Fig. 3) d'une bande d'observation Bj un nombre N de signaux $A_k[i, j]$ correspondant à la lumière rétrodiffusée par ledit point $P_k$ dans chacune des N bandes spectrales *i* du cycle d'éclairage *j*. A partir de ces signaux, il est possible de déterminer au moins une valeur représentative de la couleur du point.

Par exemple, on pourra déterminer l'angle de teinte $h_{ab}$ et la luminance L sur la sphère CIE Lab.

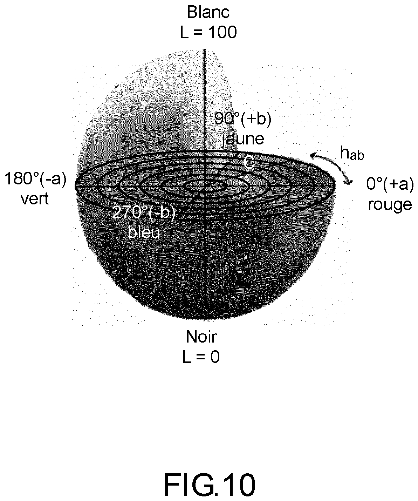

A titre de rappel, la Fig. 10 montre un schéma illustrant la sphère CIE Lab adoptée par le Comité International de l'Eclairage (CIE) en 1976 et défini selon la norme ISO 11664-4. L'angle de teinte $h_{ab}$ indique la couleur ; il évolue du rouge (angle 0°) vers le jaune (90°) puis vers le vert (180°) puis vers le bleu (270°). Sur la sphère, la luminance L est indiquée en ordonnée, les couleurs évoluant du plus clair (L = 100) au plus foncé (L = 0).

Pour calculer une valeur L*a*b* à partir des N mesures d'énergie lumineuse de chacune des bandes du spectre d'éclairage, on pourra mettre en oeuvre les étapes suivantes.

On détermine comme expliqué précédemment, et pour chaque point Pk de chaque bande d'observation, une courbe de réflectance spectrale de l'article, c'est-à-dire une courbe donnant en fonction de la longueur d'onde, une valeur correspondant à la lumière rétrodiffusée. Cette courbe de réflectance est corrigée par le spectre lumineux du dispositif d'éclairage formé de la somme des spectres lumineux de chaque source du dispositif d'éclairage. A partir du spectre corrigé, on peut calculer dans un premier temps la couleur « absolue » dans l'espace CIE XYZ (1931) défini par les normes ISO/CIE 11664-3:2019 et ISO/CIE 11664-4:2019, puis en déduire la couleur perçue dans l'espace CIE Lab (1976).

Selon un ou plusieurs exemples de réalisation, il est possible également de gagner en précision sur la couleur, au détriment d'une perte sur la résolution longitudinale, en moyennant les acquisitions A[i,j] et A[i, j+1] de deux lignes d'éclairage de même couleur i mais de deux bandes consécutives $B_j$ et $B_{j+1}$.

Ainsi, on pourra déterminer un signal d'acquisition $A'_k[i,j]$ d'un point $P_k(j)$ d'une bande d'observation Bj par :

[Math 1]

$$A'_k[i, j] = \frac{N - i}{N} A_k[i, j] + \left(1 - \frac{N - i}{N}\right) A_k[i, j + 1]$$

Cette formule donne, dans un exemple simplifié d'éclairage comportant 4 bandes de couleurs (N=4) et donc i variant de 0 à 3 :

[Math 2]

$$A'k[0, j] = 1 * Ak[0, j] + 0 * Ak[0, j + 1]$$

Couleur 1

[Math 3]

$$A'k[1, j] = \frac{3}{4} * Ak[1, j] + \frac{1}{4} * Ak[1, j + 1]$$

Couleur 2

[Math 4]

$$A'k[2, j] = \frac{1}{2} * Ak[2, j] + \frac{1}{2} * Ak[2, j + 1]$$

Couleur 3

[Math 5]

$$A'k[3, j] = \frac{1}{4} * Ak[3, j] + \frac{3}{4} * Ak[3, j + 1]$$

Couleur 4 :

De façon générale, l'unité de synchronisation 103 et l'unité de traitement 104 auxquelles il est fait référence dans la présente description peuvent être comprises dans une ou plusieurs entités physiques, par exemple un ou plusieurs ordinateurs ou cartes électroniques.

Lorsque dans la présente description, il est fait référence à des étapes de calcul ou traitement pour la mise en oeuvre notamment d'étapes de procédés, il est entendu que chaque étape de calcul ou traitement peut être mise en oeuvre par logiciel, hardware, firmware, microcode ou toute combinaison appropriée de ces technologies. Lorsqu'un logiciel est utilisé, chaque étape de calcul ou traitement peut être mise en oeuvre par des instructions de programme d'ordinateur, du code logiciel ou de la logique programmable. Ces instructions peuvent être stockées ou transmises vers un support de stockage lisible par l'unité de synchronisation et/ou l'unité de traitement et/ou être exécutées par l'unité de synchronisation et/ou l'unité de traitement afin de mettre en oeuvre ces étapes de calcul ou traitement.

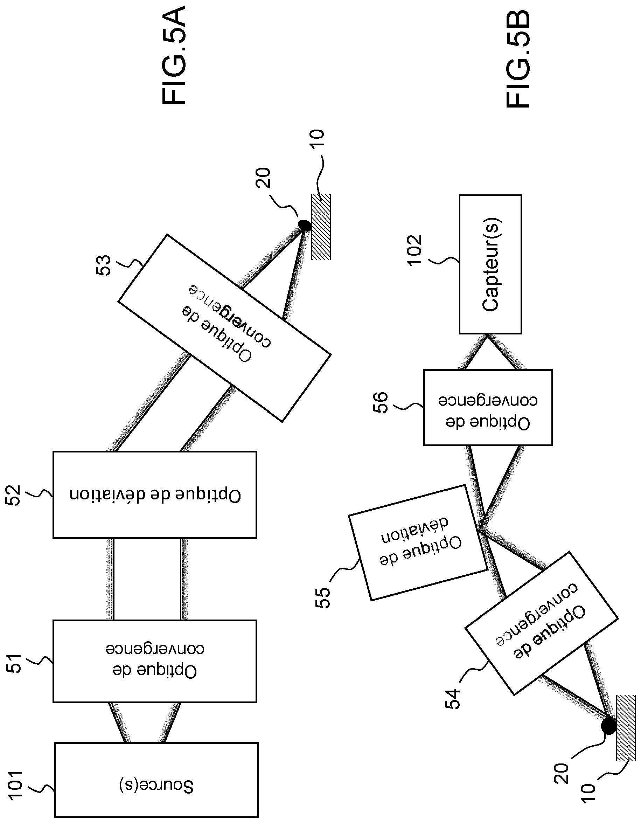

La Fig. 5A représente un schéma fonctionnel d'un exemple de dispositif d'éclairage dans un système de contrôle de la couleur selon la présente description et la Fig. 5B représente un schéma fonctionnel d'un exemple de dispositif de détection.

Un objectif du dispositif d'éclairage tel qu'illustré sur la Fig. 5A est d'uniformiser l'éclairage et de le concentrer pour former des lignes d'éclairage de dimensions voulues et suffisamment lumineuse. Il comprend ainsi outre la ou les sources 101 des optiques de convergence 51, 53 et de déviation 52.

Les optiques de convergence 54, 56 et de déviation 55 du dispositif de détection illustré sur la Fig. 5B permettent de former sur le ou les capteur(s) 102, par exemple des caméras linéaires de type CMOS ou CCD, les images des lignes d'éclairage.

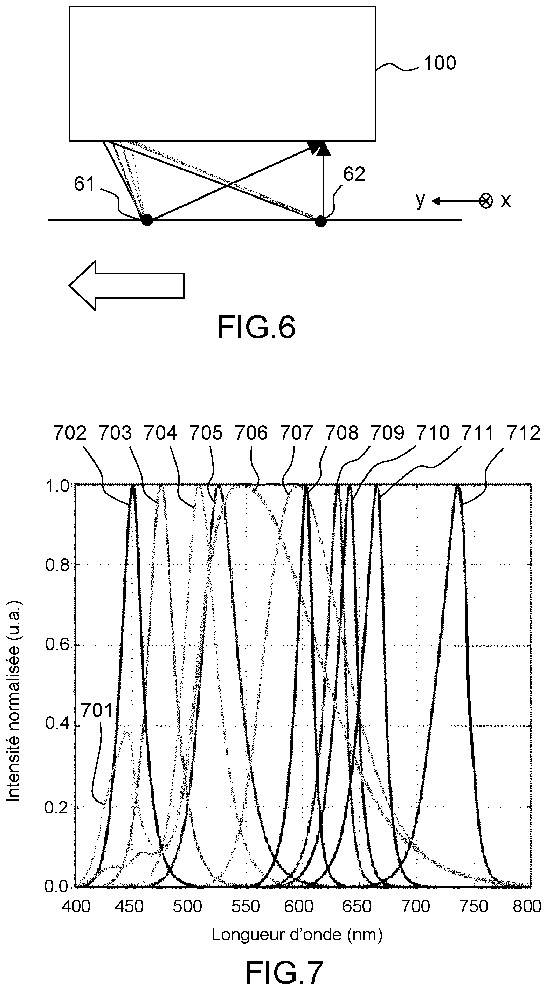

La Fig. 6 représente un schéma fonctionnel d'exemples de système de contrôle de la couleur selon la présente description, avec respectivement deux configuration d'éclairage et de détection permettant de former des bandes d'observation référencées respectivement 61 et 62.

La configuration permettant de former la bande d'observation 62 correspond à un éclairage suivant un angle d'environ 45° et une détection dans un plan sensiblement perpendiculaire au support (géométrie 0-45). Cette configuration normalisée permet de ne mesurer que la lumière diffusée. La configuration permettant de former la bande d'observation 61 correspond à un éclairage à incidence sensiblement normale et une détection à environ 45°. Cette configuration permet de mesurer également une partie du rayonnement spéculaire.

La Fig. 7 représente des spectres (courbe d'intensité normalisée en fonction de la longueur d'ondes) de lignes d'éclairage, selon un exemple de mise en oeuvre d'un procédé de contrôle de la couleur selon la présente description.

Les lignes d'éclairage sont obtenues par exemple au moyen de LED. Le contrôle indépendant de la puissance d'émission de chaque LED permet de modéliser tout type d'éclairage normalisé (D50, D65, ...) ou non par simple paramétrage. La juxtaposition des spectres d'émission des LED permet de couvrir l'ensemble de toutes les fréquences du spectre visible et d'obtenir une très bonne précision dans le contrôle de la couleur.

La table 1 ci-dessous illustre ainsi à titre d'exemple 12 types de LED dont les spectres se recouvrent.

[Table 1]

| Couleurs | Fréquence Max | Bande |
|---|---|---|
| 1. Violet | 440 | 420 - 445 |
| 2. Marine | 460 | 440 - 465 |
| 3. Bleu | 475 | 460 - 480 |
| 4. Cyan | 500 | 485 - 515 |
| 5. Vert | 530 | 510 - 550 |
| 6. Vert Clair | 550 | 530 - 565 |

(suite)

| Couleurs | Fréquence Max | Bande |
|---|---|---|
| 7. Lime | 560 | 545 - 575 |
| 8. Ambre | 590 | 580 - 600 |
| 9. Orange | 610 | 595 - 625 |
| 10. Rouge | 630 | 620 - 640 |
| 11. Rouge Vif | 670 | 660 - 680 |
| 12. Rouge Far | 735 | 720 - 750 |

Un objectif de l'éclairage est par exemple de réaliser à partir de sources incohérentes un ruban lumineux le plus homogène possible dans le sens transverse et suffisamment concentré dans le sens de la marche (ou sens du déplacement) pour augmenter la puissance lumineuse et gagner en précision dans le contrôle de la couleur.

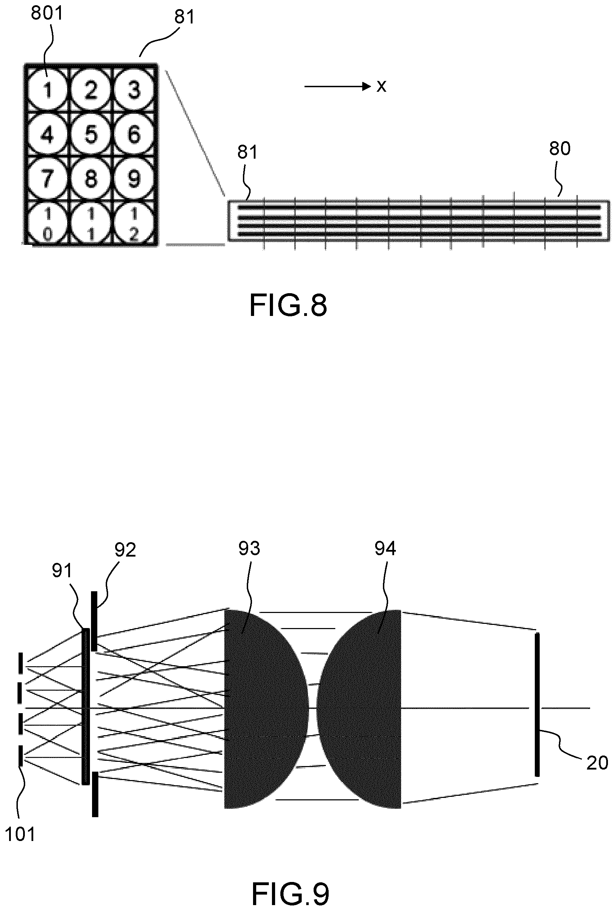

Un jeu de sources d'éclairage dont un exemple est illustré sur la Fig. 8 peut être utilisé.

Dans cet exemple, les sources d'éclairage, par exemple des LED dont les spectres sont représentés sur la Fig. 7, forment des sources ponctuelles combinées sous forme d'une matrice 80. La matrice 80 comprend un ensemble de cellules 81, chaque cellule comprenant l'ensemble des sources d'éclairage 801, dans cet exemple au nombre de 12. Ainsi, dans l'exemple de la Fig. 8, les sources d'éclairage sont réparties dans chaque module en une matrice de 3 colonnes et de 4 lignes.

Lors de la formation d'une ligne d'éclairage *i,* toutes les sources ponctuelles *i* des différents modules sont allumées, ce qui permet d'avoir un éclairage dans la bande spectrale correspondante homogène sur toute la zone à éclairer.

A noter qu'il est également possible de répartir les sources d'éclairage ponctuelle de façon aléatoire dans la matrice de chacun des modules pour homogénéiser encore l'éclairage.

La Fig. 9 représente un schéma fonctionnel vu en coupe d'un exemple de dispositif d'éclairage dans un système de contrôle de la couleur selon la présente description, dans une géométrie 0-45 (éclairage à 45° par rapport à la surface). Le dispositif d'éclairage comprend en plus des sources 101 un diffuseur 91. Un obturateur 92 a été ajouté en sortie du diffuseur pour diminuer l'angle sur le dispositif de concentration constitué de deux lentilles semi-cylindriques inversées 93, 94 de même focale. Bien que décrite à travers un certain nombre d'exemples de réalisation, les systèmes et procédés de contrôle de la couleur selon la présente description comprennent différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

**Revendications**

1. Système (100) de contrôle de la couleur en temps réel d'un article (10) positionné sur un support (201, 202) en déplacement selon une direction de déplacement (Y) donnée, comprenant :

    - un dispositif d'éclairage (101, 105) configuré pour éclairer ledit article en déplacement selon des cycles d'éclairage successifs, chaque cycle d'éclairage comprenant la formation successive, à une fréquence donnée, d'un nombre donné N de lignes d'éclairage présentant des bandes spectrales distinctes, N ≥ 4, lesdites lignes d'éclairage étant sensiblement perpendiculaires à la direction de déplacement, l'ensemble des N lignes d'éclairage formées pendant un cycle d'éclairage définissant sur l'article en déplacement une bande d'éclairage de dimension donnée dans la direction de déplacement;
    - un dispositif de détection (102, 106) configuré pour détecter, pendant chaque cycle d'éclairage, la lumière rétrodiffusée par l'article éclairé successivement par chacune desdites lignes d'éclairage, de telle sorte à former, pendant chaque cycle d'éclairage, en chaque point ($P_k$) d'un nombre de points donnés d'une bande d'observation (20) perpendiculaire à la direction de déplacement, un nombre N de signaux correspondant respectivement à la lumière rétrodiffusée par ledit point dans chacune des bandes spectrales ;
    - une unité de traitement (104) configurée pour déterminer, en chacun des points de la bande d'observation et à partir desdits N signaux, au moins une valeur représentative de la couleur dudit point.

2. Système de contrôle de la couleur selon la revendication 1, dans lequel le nombre N de lignes d'éclairage de bandes spectrales distinctes est compris entre 8 et 12.

**3.** Système de contrôle de la couleur selon l'une quelconque des revendications précédentes, dans lequel le dispositif d'éclairage comprend une pluralité de sources lumineuses (101) configurées pour l'émission successive d'un ou plusieurs faisceaux dans chacune desdites bandes spectrales, et un ou plusieurs éléments optiques (105) configurés pour former, à partir du ou desdits faisceaux émis dans chacune desdites bandes spectrales, une ligne d'éclairage dans ladite bande spectrale.

**4.** Système de contrôle de la couleur selon l'une quelconque des revendications précédentes, dans lequel une dimension de la bande d'observation dans une direction parallèle à la direction de déplacement est comprise entre environ 0,1 mm et environ 1 mm.

**5.** Système de contrôle de la couleur selon l'une quelconque des revendications précédentes, dans lequel le dispositif de détection comprend au moins un capteur fixe (102) et un ou plusieurs éléments optiques (106) configurés pour former, pendant chaque cycle, une image de chaque ligne d'éclairage rétrodiffusée par l'article sur ledit capteur.

**6.** Système de contrôle de la couleur selon la revendication 6 dans lequel ledit au moins un capteur est monochrome.

**7.** Procédé de contrôle de la couleur d'un article sur un support (201, 202) en déplacement selon une direction donnée, comprenant :

- l'éclairage de l'article en déplacement, au moyen d'un dispositif d'éclairage (101, 105) et selon des cycles d'éclairage successifs, chaque cycle d'éclairage comprenant la formation successive, à une fréquence donnée, d'un nombre donné N de lignes d'éclairage présentant des bandes spectrales distinctes, $N \geq 4$, lesdites lignes d'éclairage étant sensiblement perpendiculaires à la direction de déplacement, l'ensemble des N lignes d'éclairage formées pendant un cycle d'éclairage définissant sur l'article en déplacement une bande d'éclairage de dimension donnée dans la direction de déplacement;
- la détection, au moyen d'un dispositif de détection (102, 106), pendant chaque cycle d'éclairage, de la lumière rétrodiffusée par l'article éclairé successivement par chacune desdites lignes d'éclairage, de telle sorte à former, pendant chaque cycle d'éclairage, en chaque point d'un nombre de points donnés d'une bande d'observation (20) perpendiculaire à la direction de déplacement, un nombre N de signaux correspondant respectivement à la lumière rétrodiffusée par ledit point dans chacune des bandes spectrales;
- la détermination, en chacun des points de la bande d'observation et à partir desdits N signaux, d'au moins une valeur représentative de la couleur dudit point.

**8.** Procédé de contrôle de la couleur selon la revendication 7, dans laquelle ladite au moins une valeur représentative de la couleur comprend un écart de couleur déterminé par rapport à un objet de référence.

**9.** Procédé de contrôle de la couleur selon l'une quelconque des revendications 7 ou 8, dans lequel la détermination de ladite au moins une valeur représentative de la couleur comprend une étape de moyennage pondéré de signaux acquis par la détection de plusieurs lignes d'éclairage de même bande spectrale et de cycles d'éclairage consécutifs.

**10.** Procédé de contrôle de la couleur selon l'une quelconque des revendications 7 à 9, comprenant en outre une étape préalable de calibration du dispositif de détection.

**Patentansprüche**

**1.** System (100) zur Echtzeit-Farbkontrolle eines Artikels (10), der auf einem Träger (201, 202) positioniert ist, der sich in einer vorgegebenen Bewegungsrichtung (Y) bewegt, aufweisend:

- eine Beleuchtungsvorrichtung (101, 105), die konfiguriert ist, um den sich bewegenden Artikel in aufeinanderfolgenden Beleuchtungszyklen zu beleuchten, wobei jeder Beleuchtungszyklus die aufeinanderfolgende Bildung einer vorgegebenen Anzahl N von Beleuchtungslinien, die unterschiedliche Spektralbänder präsentieren, bei einer gegebenen Frequenz aufweist, $N \geq 4$, wobei die Beleuchtungslinien im Wesentlichen senkrecht zur Bewegungsrichtung verlaufen, wobei die Gesamtheit der während eines Beleuchtungszyklus gebildeten N Beleuchtungslinien auf dem sich bewegenden Artikel ein Beleuchtungsband einer vorgegebenen Dimension in der Bewegungsrichtung definiert;
- eine Detektionsvorrichtung (102, 106), die konfiguriert ist, um während jedes Beleuchtungszyklus das von dem nacheinander von jeder der Beleuchtungslinien beleuchteten Artikel zurückgestreute Licht zu detektieren, so dass während jedes Beleuchtungszyklus an jedem Punkt ($P_k$) einer Anzahl vorgegebener Punkte eines senkrecht zur Bewegungsrichtung verlaufenden Observationsbandes (20) eine Anzahl N von Signalen gebildet wird, die jeweils dem von dem Punkt in jedem der Spektralbänder zurückgestreuten Licht entsprechen;

- eine Verarbeitungseinheit (104), die konfiguriert ist, um an jedem der Punkte des Observationsbandes und ausgehend von den N Signalen mindestens einen Wert zu bestimmen, der für die Farbe des Punktes repräsentativ ist.

**2.** System zur Farbkontrolle nach Anspruch 1, wobei die Anzahl N von Beleuchtungslinien mit unterschiedlichen Spektralbändern zwischen 8 und 12 beträgt.

**3.** System zur Farbkontrolle nach einem der vorhergehenden Ansprüche, wobei die Beleuchtungsvorrichtung eine Vielzahl von Lichtquellen (101) aufweist, die konfiguriert sind, um nacheinander einen oder mehrere Strahlen in jedem der Spektralbänder auszusenden, und ein oder mehrere optische Elemente (105), die konfiguriert sind, um aus dem einen oder den mehreren in jedem der Spektralbänder ausgesendeten Strahlen eine Beleuchtungslinie in dem Spektralband zu bilden.

**4.** System zur Farbkontrolle nach einem der vorhergehenden Ansprüche, wobei eine Dimension des Observationsbandes in einer Richtung parallel zur Bewegungsrichtung zwischen etwa 0,1 mm und etwa 1 mm beträgt.

**5.** System zur Farbkontrolle nach einem der vorhergehenden Ansprüche, wobei die Detektionsvorrichtung mindestens einen feststehenden Sensor (102) und ein oder mehrere optische Elemente (106) aufweist, die konfiguriert sind, um während jedes Zyklus ein Bild jeder Beleuchtungslinie zu erzeugen, die von dem Artikel auf den Sensor zurückgestreut wird.

**6.** System zur Farbkontrolle nach Anspruch 6, wobei der mindestens eine Sensor monochrom ist.

**7.** Verfahren zur Farbkontrolle eines Artikels auf einem Träger (201, 202), der sich in einer vorgegebenen Bewegungsrichtung bewegt, die folgenden Schritte aufweisend:

- Beleuchten des sich bewegenden Artikels mittels einer Beleuchtungsvorrichtung (101, 105) in aufeinanderfolgenden Beleuchtungszyklen, wobei jeder Beleuchtungszyklus die aufeinanderfolgende Bildung einer vorgegebenen Anzahl N von Beleuchtungslinien, die unterschiedliche Spektralbänder präsentieren, bei einer gegebenen Frequenz aufweist, N ≥ 4, wobei die Beleuchtungslinien im Wesentlichen senkrecht zur Bewegungsrichtung verlaufen, wobei die Gesamtheit der während eines Beleuchtungszyklus gebildeten N Beleuchtungslinien auf dem sich bewegenden Artikel ein Beleuchtungsband einer vorgegebenen Dimension in der Bewegungsrichtung definiert;
- das Detektieren, mittels einer Detektionsvorrichtung (102, 106), während jedes Beleuchtungszyklus das von dem nacheinander von jeder der Beleuchtungslinien beleuchteten Artikel rückgestreute Licht, so dass während jedes Beleuchtungszyklus an jedem Punkt einer Anzahl vorgegebener Punkte eines senkrecht zur Bewegungsrichtung verlaufenden Observationsbandes (20) eine Anzahl N von Signalen gebildet wird, die jeweils dem von dem Punkt in jedem der Spektralbänder zurückgestreuten Licht entsprechen;
- Bestimmen, an jedem der Punkte des Observationsbandes und ausgehend von den N Signalen, von mindestens einem Wert, der für die Farbe des Punktes repräsentativ ist.

**8.** Verfahren zur Farbkontrolle nach Anspruch 7, wobei der mindestens eine farbrepräsentative Wert eine bestimmte Farbabweichung von einem Referenzobjekt aufweist.

**9.** Verfahren zur Farbkontrolle nach einem der Ansprüche 7 oder 8, wobei die Bestimmung des mindestens einen farbrepräsentativen Werts einen Schritt der gewichteten Mittelung von Signalen aufweist, die durch das Detektieren mehrerer Beleuchtungslinien desselben Spektralbands und aufeinanderfolgender Beleuchtungszyklen erfasst werden.

**10.** Verfahren zur Farbkontrolle nach einem der Ansprüche 7 bis 9, das zusätzlich einen vorherigen Schritt zur Kalibrierung der Detektionsvorrichtung aufweist.

**Claims**

1. A color control system (100) for controlling, in real time, the color of an article (10) positioned on a carrier (201, 202) moving in a given direction of movement (Y), comprising:

   - an illuminating device (101, 105) configured to illuminate said moving article in successive illuminating cycles, each illuminating cycle comprising successively generating, at a given frequency, a given number N of lines of light having distinct spectral bands, $N \geq 4$, said lines of light being substantially perpendicular to the direction of movement, the set of N lines of light generated during an illuminating cycle defining, on the moving article, an illuminating strip of given dimension in the direction of movement;
   - a detecting device (102, 106) configured to detect, during each illuminating cycle, the light backscattered by the article successively illuminated by each of said lines of light, such as to generate, during each illuminating cycle, for each dot ($P_k$) of a number of given dots of an observation strip (20) perpendicular to the direction of movement, a number N of signals corresponding to the light backscattered by said dot in each of the spectral bands, respectively;
   - a processing unit (104) configured to determine, for each of the dots of the observation strip and on the basis of said N signals, at least one value representative of the color of said dot.

2. The color control system as claimed in claim 1, wherein the number N of lines of light of distinct spectral bands is comprised between 8 and 12.

3. The color control system as claimed in any one of the preceding claims, wherein the illuminating device comprises a plurality of light sources (101) configured to successively emit one or more beams in each of said spectral bands, and one or more optical elements (105) configured to generate, from said one or more beams emitted in each of said spectral bands, a line of light in said spectral band.

4. The color control system as claimed in any one of the preceding claims, wherein a dimension of the observation strip in a direction parallel to the direction of movement is comprised between about 0.1 mm and about 1 mm.

5. The color control system as claimed in any one of the preceding claims, wherein the detecting device comprises at least one fixed sensor (102) and one or more optical elements (106) configured to generate, during each cycle, an image of each line of light backscattered by the article on said sensor.

6. The color control system as claimed in claim 6, wherein said at least one sensor is monochrome.

7. A color control method for controlling the color of an article on a carrier (201, 202) moving in a given direction, comprising:

   - illuminating the moving article, by means of an illuminating device (101, 105) and in successive illuminating cycles, each illuminating cycle comprising successively generating, at a given frequency, a given number N of lines of light having distinct spectral bands, $N \geq 4$, said lines of light being substantially perpendicular to the direction of movement, the set of N lines of light generated during an illuminating cycle defining, on the moving article, an illuminating strip of given size in the direction of movement;
   - detecting, by means of a detecting device (102, 106), during each illuminating cycle, the light backscattered by the article successively illuminated by each of said lines of light, such as to generate, during each illuminating cycle, for each dot of a number of given dots of an observation strip (20) perpendicular to the direction of movement, a number N of signals corresponding to the light backscattered by said dot in each of the spectral bands, respectively;
   - determining, for each of the dots of the observation strip and on the basis of said N signals, at least one value representative of the color of said dot.

8. The color control method as claimed in claim 7, wherein said at least one value representative of the color comprises a color difference determined with respect to a reference object.

9. The color control method as claimed in either one of claims 7 and 8, wherein the determination of said at least one value representative of the color comprises a step of computing the weighted average of signals acquired via detection of a plurality of lines of light of same spectral band in consecutive illuminating cycles.

**10.** The color control method as claimed in any one of claims 7 to 9, further comprising a prior step of calibrating the detecting device.

**100**

Unité de synchronisation 103

Source(s) d'éclairage 101

Capteur(s) 102

Unité de traitement 104

$C_4$ $C_3$ $C_2$ $C_1$

Dispositif optique pour la formation des lignes d'éclairage 105

Dispositif optique pour l'imagerie des lignes d'éclairage 106

$C_4$ $C_3$ $C_2$ $C_1$

10

y

FIG.1

EP 4 034 863 B1

FIG.2A

FIG.2B

FIG.3

FIG.4

# FIG.5A

| 101 | Source(s) |

| 51 | Optique de convergence |

| 52 | Optique de déviation |

| 53 | Optique de convergence |

20

10

# FIG.5B

| 102 | Capteur(s) |

| 56 | Optique de convergence |

| 55 | Optique de déviation |

| 54 | Optique de convergence |

20

10

FIG.6

FIG.7

FIG.8

FIG.9

FIG.10

**EP 4 034 863 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2172171 A
- WO 9425838 A
- US 20070139735 A